# EUROPEAN PATENT APPLICATION

(11) **EP 4 592 328 A1**
(43) Date of publication of application: **30.07.2025**
(21) Application number: 23868145.6
(22) Date of filing: 15.09.2023
(51) Int. Cl.: C08G 18/42, C08G 18/66, C08G 18/73, C08L 101/16

(54) **BIODEGRADABLE POLYURETHANE RESIN**

(30) Priority: 20.09.2022 JP 2022149032
(71) Applicant: Daicel Corporation, Osaka-shi, Osaka 530-0011 (JP)
(72) Inventor: KAMADA, Takeru, Tokyo 108-8230 (JP); MAETSU, Naritoshi, Tokyo 108-8230 (JP)
(74) Representative: Grünecker Patent- und Rechtsanwälte PartG mbB
(86) International application number: PCT/JP2023/033745
(87) International publication number: WO 2024/063024

(57) **Abstract**

To provide a biodegradable polyurethane resin exhibiting excellent mechanical properties (strength, toughness) that enable practical use as a molded article and being less likely to generate highly toxic aromatic amines. The biodegradable polyurethane resin of the disclosure is a biodegradable polyurethane resin including a structural unit derived from a polylactone polyol and a structural unit derived from an aliphatic diisocyanate having 7 or more carbons and having no side chains. Furthermore, the method for producing the biodegradable polyurethane resin of the disclosure includes reacting components containing at least a polylactone polyol and an aliphatic diisocyanate having 7 or more carbons and having no side chains.

## Description

### Technical Field

The disclosure relates to a biodegradable polyurethane resin. The present application claims priority to JP 2022-149032 filed in Japan on September 20, 2022, the content of which is incorporated herein by reference.

### Background Art

In recent years, from the viewpoint of reduction in environmental load, biodegradable resin materials that can be degraded in the natural environment have attracted attention, and various development has been actively made. Among these, development has been made to improve mechanical properties for polyurethane resins, which are reaction products of polyols and polyisocyanates, because biodegradable polyurethane resins tend to have poor mechanical properties (e.g., strength, toughness).

For example, Patent Document 1 describes a biodegradable thermoplastic polyurethane elastomer prepared by blending, in a specific blending ratio, a polycaprolactone-based copolymer polyol having an alkyl side chain in a molecular chain, a poly(ethylene-propylene) copolymer polyol, 4,4'-diphenylmethane diisocyanate, and 1,3-propanediol.

Furthermore, for example, Patent Document 2 describes a biodegradable polyurethane urea prepared by using a biodegradable polyester diol (e.g., poly-ε-caprolactone diol), a diisocyanate (e.g., lysine diisocyanate (LDI)), and an aliphatic diamine having a side chain (e.g., 1,2-butanediamine (1,2-BDA)).

Furthermore, for example, Patent Document 3 describes a biodegradable polyurethane prepared by using poly-ε-caprolactone diol, lysine diisocyanate (LDI) or butane diisocyanate (BDI), and a chain extender (e.g., 1,4-butanediol (1,4-BG)).

### Citation List

### Patent Document

Patent Document 1: JP 2006-070129 A
Patent Document 2: JP 2009-203404 A
Patent Document 3: JP 2012-062370 A

### Summary of Invention

### Technical Problem

However, the biodegradable thermoplastic polyurethane elastomer of Patent Document 1 has insufficient biodegradability and causes environmental load by generation of highly toxic aromatic amines at the time of decomposition. Furthermore, the biodegradable polyurethane urea of Patent Document 2 and the biodegradable polyurethane of Patent Document 3 have insufficient mechanical properties when practically used and insufficient productivity due to a long curing time.

An object of the disclosure is to provide a biodegradable polyurethane resin exhibiting excellent mechanical properties (strength, toughness) that enable practical use as a molded article and being less likely to generate highly toxic aromatic amines. Another object of the disclosure is to provide a biodegradable polyurethane resin exhibiting excellent mechanical properties (strength, toughness) that enable practical use as a molded article, achieving excellent productivity of a molded article (low viscosity, short curing time), and being less likely to generate highly toxic aromatic amines.

### Solution to Problem

As a result of diligent research, the inventors of the disclosure found that the issues described above can be solved by a biodegradable polyurethane resin having specific structural units. The disclosure relates to those completed based on these findings.

The disclosure provides a biodegradable polyurethane resin including a structural unit derived from a polylactone polyol and a structural unit derived from an aliphatic diisocyanate having 7 or more carbons and having no side chains.

The polylactone polyol described above is preferably a compound represented by Formula (1) below.

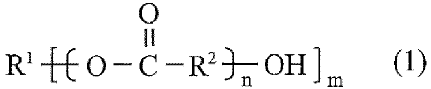

In Formula (1), R¹ represents an m-valent hydrocarbon group, R² represents a divalent hydrocarbon group, m represents an integer of 2 to 10, and n represents an integer of 1 to 35.

The biodegradable polyurethane resin described above may further include a structural unit derived from an aliphatic diol.

The aliphatic diol described above is preferably a diol having a linear alkylene group.

The biodegradable polyurethane resin described above preferably includes a structural unit derived from a reaction product of the polylactone polyol described above and the aliphatic diisocyanate described above; and a structural unit derived from the aliphatic diol described above.

In the biodegradable polyurethane resin described above, a molar ratio (aliphatic diol/polylactone polyol) of the structural unit derived from the aliphatic diol described above to the structural unit derived from the polylactone polyol described above may be from 0.10 to 3.00.

The disclosure also provides a method for producing a biodegradable polyurethane resin. The method includes reacting components containing at least a polylactone polyol and an aliphatic diisocyanate having 7 or more carbons and having no side chains.

The production method described above preferably further includes reacting a reaction product produced by reacting the polylactone polyol described above and the aliphatic diisocyanate described above in advance with an aliphatic diol.

In the method described above, an equivalent ratio (NCO/OH) of NCO groups contained in the aliphatic diisocyanate described above to a total number of OH groups contained in the polylactone polyol described above and the aliphatic diol described above is preferably from 0.90 to 1.10.

The disclosure also provides a molded article made of the biodegradable polyurethane resin described above.

### Advantageous Effects of Invention

When the biodegradable polyurethane resin of the disclosure is used, a molded article that does not generate highly toxic aromatic amines at the time of decomposition and that has excellent mechanical properties that enable practical use can be produced. Furthermore, when the biodegradable polyurethane resin of the disclosure is used, a molded article that does not generate highly toxic aromatic amines at the time of decomposition and that has excellent mechanical properties that enable practical use can be produced with excellent productivity.

### Description of Embodiments

### Biodegradable Polyurethane Resin

The biodegradable polyurethane resin of the disclosure includes a structural unit derived from a polylactone polyol; and a structural unit derived from an aliphatic diisocyanate having 7 or more carbons and having no side chains. The biodegradable polyurethane resin described above also preferably contains a reaction product produced by reacting components containing at least the polylactone polyol described above and the diisocyanate described above.

### Polylactone Polyol

The polylactone polyol used in the disclosure is a biodegradable polyol and is preferably a reaction product of a polyhydric alcohol and lactone.

The polylactone polyol described above is preferably a polylactone polyol having from 2 to 10 (more preferably from 2 to 6, and even more preferably from 2 to 4) hydroxy groups and having a functionality of 2 to 10 (more preferably a functionality of 2 to 6, and even more preferably a functionality of 2 to 4) and is particularly preferably a difunctional polylactone diol having two hydroxy groups.

The polylactone polyol described above is also preferably a compound represented by Formula (1) below. In Formula (1), R¹ represents an m-valent hydrocarbon group, R² represents a divalent hydrocarbon group, m represents an integer of 2 to 10, and n represents an integer of 1 to 35.

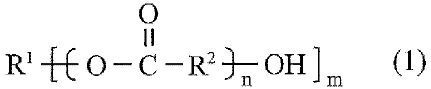

m described above is preferably from 2 to 6, and more preferably from 2 to 4.

The number of carbons of the m-valent hydrocarbon group of R¹ described above is preferably from 2 to 20, more preferably from 2 to 10, and even more preferably from 2 to 5. That is, the m-valent hydrocarbon group of R¹ described above is, for example, preferably a group having a structural formula formed by removing m groups of hydroxy groups from a structural formula of an m-valent polyhydric alcohol having from 2 to 20 carbons (preferably from 2 to 10 carbons, and more preferably from 2 to 5 carbons). That is, the polylactone polyol described above preferably has a lactone polymer chain formed in a manner that a hydroxy group of the m-valent polyhydric alcohol is a starting point.

Examples of the m-valent polyhydric alcohol described above include divalent alcohols (e.g., ethylene glycol, propylene glycol, diethylene glycol, 1,4-butanediol, neopentyl glycol, 1,6-hexanediol, trimethylpentanediol, cyclohexanediol), trivalent alcohols (e.g., glycerin, trimethylolpropane), tetravalent alcohols (e.g., diglycerin, pentaerythritol, methylglucoside, tetramethylolcyclohexane), pentavalent alcohols (e.g., glucose, mannose, fructose), and hexavalent alcohols (e.g., dipentaerythritol, sorbitol). Examples of heptavalent to decavalent alcohols include saccharides (e.g., sucrose, lactose) and derivatives thereof, and polyphenols. Among these, from the viewpoint of ease in achieving excellent mechanical properties of the biodegradable polyurethane resin described above, divalent to hexavalent alcohols are preferred, divalent to tetravalent alcohols are more preferred, divalent alcohols are particularly preferred, and ethylene glycol is the most preferred.

n described above is preferably from 1 to 20, and more preferably from 3 to 10.

The divalent hydrocarbon group of R² described above is preferably a linear or branched (more preferably linear) alkylene group having from 2 to 20 carbons (preferably from 3 to 15 carbons, and more preferably from 4 to 10 carbons). Examples of the alkylene group described above include a methylene group, an ethylene group, a trimethylene group, a tetramethylene group, and a pentamethylene group. One type of these may be used, or two or more types of these may be used. Among these, from the viewpoint of ease in achieving excellent mechanical properties of the biodegradable polyurethane resin described above, a pentamethylene group is preferred.

The divalent hydrocarbon group of R² described above is preferably a group derived from lactone. That is, the polylactone polyol described above preferably has a lactone polymer chain having a degree of polymerization of n formed in a manner that a hydroxy group of the polyhydric alcohol of R¹ described above is a starting point.

Examples of the lactone described above include α-acetolactone, β-propiolactone, γ-butyrolactone, γ-valerolactone, γ-nonalactone, δ-valerolactone, ε-caprolactone, cyclopentadecanolide, and cyclohexadecanolide. One type of these may be used, or two or more types of these may be used. Among these, from the viewpoint of ease in achieving excellent mechanical properties of the biodegradable polyurethane resin described above, ε-caprolactone is preferred.

The number average molecular weight of the polylactone polyol described above is preferably from 300 to 80000, more preferably from 500 to 4000, and even more preferably from 1000 to 3000. When the number average molecular weight is 300 or greater, tensile strength of the resulting biodegradable polyurethane resin tends to be large. When the number average molecular weight is 80000 or less, tensile elongation tends to be large. Furthermore, when the number average molecular weight is 1000 or greater, both tensile strength and tensile elongation tend to be large. When the number average molecular weight is 3000 or greater, caprolactone tends to be crystallized, and the tensile elongation tends to be small.

### Diisocyanate

The diisocyanate used in the disclosure is an aliphatic diisocyanate having 7 or more carbons and having no side chains.

The biodegradable polyurethane resin of the disclosure is less likely to generate highly toxic aromatic amines at the time of decomposition because the structural unit derived from diisocyanate mainly includes a structural unit derived from an aliphatic diisocyanate. Furthermore, because no side chains are included, aggregation of the structural units derived from diisocyanate described above is less likely to be inhibited, excellent mechanical properties of the biodegradable polyurethane resin described above tend to be achieved.

The number of carbons of the aliphatic diisocyanate described above is 7 or greater, preferably from 7 to 22, and more preferably from 7 to 10. Examples of the aliphatic diisocyanate described above include a linear aliphatic diisocyanate (e.g., 1,5-pentane diisocyanate, 1,6-hexane diisocyanate), and an alicyclic diisocyanate having no side chains (e.g., cyclohexylene diisocyanate, (cyclohexane diyl bismethylene)diisocyanate, dicyclohexylmethane-4,4-diisocyanate). The aliphatic diisocyanate described above may be a multimer of the aliphatic diisocyanate described above or the alicyclic isocyanate described above (e.g., trimer such as an isocyanurate group-containing diisocyanate). Only one type of them may be used, or two or more types thereof may be used. Among these, from the viewpoint of ease in achieving excellent mechanical properties of the biodegradable polyurethane resin described above, a linear aliphatic diisocyanate having from 7 to 10 carbons is preferred, and pentamethylene diisocyanate is more preferred from the viewpoint of availability as a biomass material.

The content proportion of the structural unit derived from the aliphatic diisocyanate described above with respect to 1 part by mole of the structural unit derived from the polylactone polyol described above is preferably from 1.00 to 7.00 parts by mole, more preferably from 1.00 to 5.00 parts by mole, and even more preferably from 1.00 to 3.00 parts by mole.

The viscosity at 75°C of the biodegradable polyurethane resin made of the structural unit derived from the polylactone polyol described above and the structural unit derived from the diisocyanate described above, that is, the reaction product of the polylactone polyol described above and the diisocyanate described above, is preferably 1500 mPa·s or less, more preferably 1000 mPa·s or less, and even more preferably 750 mPa·s or less, when the reaction product is used as a prepolymer in the prepolymer method described below.

From the viewpoint of ease in achieving excellent mechanical properties, the biodegradable polyurethane resin of the disclosure preferably further includes a structural unit derived from an aliphatic diol in addition to the structural unit derived from the polylactone polyol and the structural unit derived from the diisocyanate.

The biodegradable polyurethane resin described above may be a reaction product produced by a one-shot method in which the polylactone polyol described above, the diisocyanate described above, and the aliphatic diol are reacted all together.

From the viewpoint of ease in achieving excellent mechanical properties, the biodegradable polyurethane resin described above preferably includes a structural unit derived from a reaction product of the polylactone polyol described above and the diisocyanate described above and a structural unit derived from the aliphatic diol. That is, the biodegradable polyurethane resin described above is preferably a reaction product produced by a prepolymer method in which a reaction product (prepolymer) of the polylactone polyol described above and the diisocyanate described above are reacted with the aliphatic diol.

### Aliphatic Diol

The aliphatic diol used in the disclosure is preferably a linear aliphatic diol having no side chains. The number of carbons of the aliphatic diol used in the disclosure is preferably 2 or greater, more preferably from 2 to 10, and even more preferably from 3 to 6.

Examples of the linear aliphatic diol described above include a diol having a linear alkylene group (e.g., ethylene glycol, 1,3-propanediol, 1,4-butanediol, 1,5-pentanediol, 1,6-hexanediol, 1,8-octanediol, 1,9-nonanediol), and a polyalkylene glycol (e.g., diethylene glycol, triethylene glycol, dipropylene glycol). Only one type of them may be used, or two or more types thereof may be used. Among these, from the viewpoint of ease in achieving excellent mechanical properties of the biodegradable polyurethane resin described above, a 1,4-butanediol is preferred.

The molecular weight of the aliphatic diol described above is preferably 350 or less, more preferably 300 or less, and even more preferably 200 or less. When the molecular weight is 350 or less, aggregation of the structural units derived from the aliphatic diol described above is less likely to be inhibited, and thus excellent mechanical properties of the biodegradable polyurethane resin described above tend to be achieved.

The content proportion of the structural unit derived from the aliphatic diol described above with respect to 1 part by mole of the structural unit derived from the polylactone polyol described above may be 0 parts by mole and may be from 0.10 to 5.00 parts by mole (preferably from 0.50 to 4.00 parts by mole, and more preferably from 0.90 to 3.00 parts by mole).

The molar ratio (aliphatic diol/polylactone polyol) of the structural unit derived from the aliphatic diol described above to the structural unit derived from the polylactone polyol described above may be 0 and may be from 0.10 to 5.00 (preferably from 0.50 to 4.00, and more preferably from 0.90 to 3.00).

The biodegradable polyurethane resin of the disclosure may contain another structural unit (e.g., structural unit derived from an additional biodegradable polyol other than the polylactone polyol described above, structural unit derived from an additional polyisocyanate other than the aliphatic diisocyanate having 7 or more carbons and having no side chains described above, structural unit derived from an additional chain extender other than the aliphatic diol described above) in a range that does not impair the effect of the disclosure.

Examples of the additional biodegradable polyol described above include a polyhydroxy carboxylic acid (e.g., polyglycolic acid, polylactic acid, polyhydroxybutyric acid, polyhydroxyvaleric acid), a polyester polyol (e.g., polyglycolic acid, polylactic acid, polyhydroxybutyric acid, polyhydroxyvaleric acid), and a polyether polyol (e.g., polyoxyethylene glycol, polyoxypropylene glycol, polyoxyethylenoxy propylene glycol, polyoxybutylene glycol, polyoxytetramethylene glycol). One type of these may be used, or two or more types of these may be used.

The content proportion of the structural unit derived from the additional biodegradable polyol described above in a total amount of the structural unit derived from the polylactone polyol described above and the structural unit derived from the additional biodegradable polyol described above is preferably 3 mol% or less, more preferably 1 mol% or less, and even more preferably 0.5 mol% or less.

Examples of the additional polyisocyanate described above include a linear aliphatic diisocyanate having 4 or less carbons (e.g., 1,3-propane diisocyanate, 1,4-butane diisocyanate), a branched aliphatic diisocyanate (e.g., 1,3-butane diisocyanate, 2,4,4-trimethylhexane-1,6-diyl diisocyanate), an alicyclic diisocyanate having a side chain (e.g., ethyl ester L-lysine diisocyanate, isophorone diisocyanate), a dimer acid diisocyanate, an aromatic diisocyanate (e.g., diphenylmethane diisocyanate, tolylene diisocyanate, tolidine diisocyanate, xylylene diisocyanate, phenylene diisocyanate, naphthalene diisocyanate, tetramethylxylene diisocyanate). One type of these may be used, or two or more types of these may be used.

The content proportion of the structural unit derived from the additional polyisocyanate described above in the total amount of the structural unit derived from the aliphatic diisocyanate having 7 or more carbons and having no side chains described above and the structural unit derived from the additional polyisocyanate described above is preferably 3 mol% or less, more preferably 1 mol% or less, and even more preferably 0.5 mol% or less.

Examples of the additional chain extender described above include an aliphatic diol having a side chain (e.g., 1,2-propanediol, 1,3-butanediol, 3-methyl-1,5-pentanediol), an alicyclic diol (e.g., 1,6-cyclohexanedimethanol), an aliphatic diamine (e.g., 1,2-propanediamine, 1,3-propanediamine, 1,4-butanediamine, isophoronediamine). One type of these may be used, or two or more types of these may be used.

The content proportion of the structural unit derived from the additional chain extender described above in a total amount of the structural unit derived from the aliphatic diol described above and the structural unit derived from the additional chain extender described above is preferably 3 mol% or less, more preferably 1 mol% or less, and even more preferably 0.5 mol% or less.

The biodegradable polyurethane resin of the disclosure may be a biodegradable polyurethane resin composition prepared by blending with an additive (e.g., mold release agent, plasticizer, coloring agent, antioxidant, UV stabilizer, heat stabilizer, crosslinking agent, foaming agent, foam stabilizer, urethanizing catalyst, filler). The additive described above may be blended together with raw material components before reaction or may be blended by melt-kneading to a biodegradable polyurethane resin prepared by the reaction.

### Method for Producing Biodegradable Polyurethane Resin

The biodegradable polyurethane resin of the disclosure can be produced by reacting components containing at least a polylactone polyol and an aliphatic diisocyanate having 7 or more carbons and having no side chains (the polylactone polyol described above, the diisocyanate described above, and optionally an aliphatic diol). The polylactone polyol described above, the diisocyanate described above, and the aliphatic diol described above are the same as those described for the biodegradable polyurethane resin described above.

Examples of the method of reacting components containing the polylactone polyol and the diisocyanate described above include: a one-shot method in which these are reacted all together; and a prepolymer method in which a reaction product (prepolymer) produced by reacting the polylactone polyol described above and the diisocyanate described above in advance are reacted with the aliphatic diol. Among these, from the viewpoint of ease in making uniform molecular structures of the degradable polyurethane resin and ease in achieving excellent mechanical properties of the biodegradable polyurethane resin described above, the prepolymer method is preferred.

In the reaction described above, an equivalent ratio (NCO/OH) of NCO groups contained in the diisocyanate described above to a total number of OH groups contained in the polylactone polyol described above and the aliphatic diol described above is preferably from 0.90 to 1.10, more preferably from 0.95 to 1.05, and even more preferably 0.97 to 1.03.

Furthermore, in the reaction described above, the molar ratio (aliphatic diol/polylactone polyol) of the aliphatic diol described above to the polylactone polyol described above may be 0 and may be from 0.10 to 5.00 (preferably from 0.50 to 4.00, and more preferably from 0.90 to 3.00).

The viscosity at 75°C of the prepolymer described above in the prepolymer method is preferably 1500 mPa·s or less, more preferably 1000 mPa·s or less, and even more preferably 750 mPa·s or less. When the viscosity described above is 1500 mPa·s or less, excellent moldability is achieved for a material for molding before reaction, and thus excellent productivity of a molded article is achieved. The viscosity described above can be measured, for example, by using a viscometer (product name "VISCOMETER TV-622", available from Toki Sangyo Co., Ltd.).

When the biodegradable polyurethane resin described above is produced by a one-shot method, the reaction temperature is, for example, preferably from 20 to 220°C, more preferably from 45 to 180°C, and even more preferably from 70 to 140°C. The reaction time is, for example, preferably from 50 to 900 minutes, more preferably from 100 to 600 minutes, and even more preferably from 150 to 300 minutes.

When the biodegradable polyurethane resin described above is produced by a prepolymer method, the reaction temperature for producing the prepolymer is, for example, preferably from 20 to 200°C, more preferably from 45 to 150°C, and even more preferably from 70 to 100°C. The reaction time of the reaction for producing the prepolymer is only required to be a reaction time that makes the isocyanate group concentration in the reaction liquid a predetermined value and is not particularly limited. For example, the reaction time is from 10 to 400 minutes, from 20 to 200 minutes, or from 30 to 100 minutes. The reaction temperature at the time of reacting the prepolymer described above and the aliphatic diol is, for example, preferably from 20 to 220°C, more preferably from 45 to 180°C, and even more preferably from 70 to 140°C. The reaction time is, for example, preferably 420 minutes or shorter, more preferably 360 minutes, and even more preferably 300 minutes or shorter. When the reaction time is 240 minutes or shorter, excellent productivity is achieved due to the short reaction time.

As necessary, for example, the resulting biodegradable polyurethane resin described above may be heat-treated at 100°C or lower for 1 to 100 hours.

In the production of the biodegradable polyurethane resin described above, a urethanizing catalyst (e.g., tertiary amine-based compound, organometal-based compound) may be used.

### Molded Article

The biodegradable polyurethane resin of the disclosure can form a molded article that is biodegradable while excellent mechanical properties (strength, toughness) enabling practical use are exhibited, for example, by a molding method in which a liquid raw material for molding before reaction is shaped and then reacted and solidified, a molding method in which softening and melting are performed by heating after reaction, or a molding method which uses a solution prepared by dissolving the biodegradable polyurethane resin after reaction.

Specific examples of the molding method are not particularly limited and include known molding methods, such as coating, cast molding, vacuum molding, extrusion molding, calender molding, blow molding, inflation molding, rotational molding, slush molding, foam molding, compression molding, stamping molding, casting, and dipping.

Specific examples of the molded article described above are not particularly limited and include a film, a sheet, a hose, a tube, a packaging material, a vibration insulator, a binder, a coating film, a coating material, a fiber, foam, a synthetic leather, and an elastic body. The molded article described above can be suitably used in a wide variety of use, such as clothing and non-clothing articles, packaging materials, household utensils and miscellaneous articles, furniture parts, machine parts, electrical and electronic parts, and parts for automobiles and other means of transport, parts of industrial products, civil engineering and construction materials, agricultural articles, fishing articles, garden supplies, sanitary articles, medical and nursing care articles, and sporting and recreational equipment.

A Shore A hardness, determined by the evaluation method described in Examples, of the biodegradable polyurethane resin of the disclosure is preferably 80 or greater, and more preferably 85 or greater.

The tensile strength, determined by the evaluation method of strength described in Examples, of the biodegradable polyurethane resin of the disclosure is preferably 5 MPa or greater, and more preferably 7 MPa or greater.

The tensile strength, determined by the evaluation method of toughness described in Examples, of the biodegradable polyurethane resin of the disclosure is preferably 500% or greater, and more preferably 550% or greater.

Each embodiment disclosed in the present specification can be combined with any other feature disclosed in the present specification. The configurations, combinations thereof, or the like in each of the embodiments are exemplary, and additions, omissions, replacements, and other changes of the configurations may be made as appropriate without departing from the spirit of the disclosure. In addition, each of the inventions according to the disclosure is not limited by the embodiments or the following examples but is limited only by the claims.

### Examples

An embodiment of the disclosure will be described in more detail below based on Examples.

The raw material components that were used in Examples and Comparative Examples of the disclosure are as follows.
- Polycaprolactone polyol A1: Difunctional polycaprolactone diol, trade name "PLACCEL 210N", available from Daicel Corporation; number average molecular weight: 1000
- Polycaprolactone polyol A2: Difunctional polycaprolactone diol, trade name "PLACCEL 220N", available from Daicel Corporation; number average molecular weight: 2000
- Diisocyanate B1: 1,5-Pentane diisocyanate, trade name "STABiO PDI", available from Mitsui Chemicals, Inc.
- Diisocyanate B2: Diphenylmethane diisocyanate, trade name "Millionate MT", available from Tosoh Corporation
- Diisocyanate B3: Ethyl ester L-lysine diisocyanate, trade name "LDI", available from Alfa Aesar
- Aliphatic diol C: 1,4-Butanediol, trade name "14BG", available from Mitsubishi Chemical Corporation; molecular weight: 90.12

### Example 1

In a glass container, the polylactone polyol A1 (1.00 part by mole) and the diisocyanate B1 (2.00 parts by mole) were put and reacted at 80°C until the isocyanate group concentration (measured in accordance with the method B in JIS K 1603-1:2007) in the reaction liquid stopped changing, and thus a prepolymer was produced.

In the glass container, the aliphatic diol C described above (1.00 part by mole) was added in a manner that the equivalent ratio (NCO/OH) of NCO groups contained in the diisocyanate B1 described above to a total number of OH groups contained in the polylactone polyol A1 described above and the aliphatic diol C described above was 0.99, and uniformly mixed and defoamed by using a rotation/revolution type agitation machine (product name "THINKY MIXER AR-250", available from Thinky Corporation), and thus a liquid raw material for molding was produced.

The resulting liquid raw material for molding was casted in a mold and heated in the mold in an oven at 120°C for 960 minutes to react and solidify, and then further cured at 23°C and 50%RH for 48 hours, and thus a sample for hardness measurement (rectangle, 13 mm length, 20 mm width, and 2 mm thickness) and a sample for tensile test (dumbbell shape (JIS K 6251, No. 3), 100 mm length, 25 mm width, and 2 mm thickness) were produced.

The prepolymer viscosity of the prepolymer described above, the urethane curing time of the liquid raw material for molding described above, and color tone, texture, hardness, melting point and enthalpy of fusion, strength, toughness, and biodegradability of the sample described above were measured and evaluated.

### Prepolymer Viscosity

The viscosity at 75°C of the prepolymer described above was measured by using a viscometer (product name "VISCOMETER TV-22", available from Toki Sangyo Co., Ltd.). Because casting is easier with a lower viscosity of the prepolymer, a lower viscosity indicates superior productivity of a molded article.

### Urethane Curing Time

The storage elastic modulus was measured at a strain of 5%, a frequency of 10 Hz, and a temperature of 120°C by using a rotary rheometer (product name "MCR 302", available from Anton Paar GmbH). A time period required to reach a certain value without changing the storage elastic modulus was evaluated as the urethane curing time. A shorter urethane curing time indicates superior productivity of a molded article.

### Color Tone

The appearance of the sample for hardness measurement described above was visually observed at 23°C and 50%RH, and evaluation was performed to determine whether the sample was transparent.

### Texture

The sample for hardness measurement described above was evaluated by touching by a finger at 23°C and 50%RH to determine whether the sample was elastic.

### Hardness

The sample for hardness measurement described above was measured by using a Shore A hardness tester (available from Shimadzu Corporation) in accordance with JIS K 6253.

### Strength, Toughness

Using a Tensilon universal testing machine (product name "RTC-1350A", available from A&D Company, Limited) at 23°C and 50%RH, the sample for tensile test described above was subjected to a tensile test in a condition at a reference line distance of 20 mm and a pulling speed of 500 mm/min, and thus a stress at 300% elongation (tensile strength) and an elongation at breakage of the sample (elongation at break) were measured. A larger tensile strength indicates superior strength. A larger elongation at break indicates superior toughness.

### Biodegradability

The degree of biodegradation at 180 days was evaluated in an aerobic composting condition at 58°C (±2°C) in accordance with ISO 14855-1. A higher value indicates superior biodegradability.

### Examples 2 to 5 and Comparative Examples 1 to 3

The procedure same as Example 1 was performed except for changing the raw material components and/or parts by mole as listed in Table 1 below. Note that, in Comparative Example 3, a molded article that can be measured and evaluated could not be produced.

The results of measurement and evaluation are summarized and shown in Table 1 below.

### [Table 1]

**Table 1**

| (part by mole) | | Examples | | | | | Comparative Example | | |
|---|---|---|---|---|---|---|---|---|---|
| | | 1 | 2 | 3 | 4 | 5 | 1 | 2 | 3 |
| Polylactone polyol | A1 | 1.00 | 1.00 | 1.00 | | | 1.00 | 1.00 | 1.00 |
| | A2 | | | | 1.00 | 1.00 | | | |
| Diisocyanate | B1 | 2.00 | 2.50 | 3.00 | 3.00 | 3.70 | | | |
| | B2 | | | | | | 2.00 | 3.00 | |
| | B3 | | | | | | | | 2.00 |
| Short-chain aliphatic diol C | | 1.00 | 1.50 | 2.00 | 2.00 | 2.70 | 1.00 | 2.00 | 1.00 |
| Equivalent ratio (NCO/OH) | | 0.99 | 0.99 | 0.99 | 0.99 | 0.99 | 0.99 | 0.99 | 0.99 |
| Prepolymer viscosity (mPa·s) | | 694 | - | - | - | - | 2666 | - | 1003 |
| Urethane curing time (minute) | | 225 | - | - | - | - | 44 | - | 600 |
| Color tone | | Transparent | Transparent | Transparent | Pale white | Transparent | Transparent | Pale white | - |
| Texture | | Elastic | Elastic | Elastic | Elastic | Elastic | Elastic | Elastic | - |
| Shore A hardness | | 85 | 88 | 93 | 95 | 85 | 85 | 85 | - |
| Tensile strength (MPa) | | 7 | 9 | 12 | 8 | 11 | 10 | 13 | - |
| Elongation at break (%) | | 649 | 579 | 528 | 674 | 505 | 507 | 410 | - |
| Degree of biodegradation (%) | | 90 | 90 | 90 | 90 | 90 | 30 | 30 | - |

In the table, "-" indicates that no measurement and evaluation were performed.

The biodegradable polyurethane resins of Examples 1 to 5 each exhibited that the biodegradable polyurethane resin had excellent mechanical properties, could be practically used, and had excellent biodegradability (tensile strength: 7 to 12 MPa; strength at break: 505 to 674%; degree of biodegradation: 90 days). Furthermore, in Example 1, the prepolymer viscosity was low (694 mPa·s), the urethane curing time was short (225 minutes), and thus excellent productivity was exhibited.

On the other hand, among the biodegradable polyurethane resins of Comparative Examples 1 and 2 that generated highly toxic aromatic amines, the biodegradable polyurethane resin of Comparative Example 1 had poor biodegradability (degree of biodegradation: 30%) and poor productivity (prepolymer viscosity: 2666 mPa·s). For the biodegradable polyurethane resin of Comparative Example 3, a sample for test could not be removed from the mold, and mechanical properties (strength, toughness) were poor.

Hereinafter, variations of the invention according to the disclosure will be described.
[Supplementary Note 1] A biodegradable polyurethane resin including:
   a structural unit derived from a polylactone polyol; and
   a structural unit derived from an aliphatic diisocyanate having 7 or more carbons and having no side chains.
[Supplementary Note 2] The biodegradable polyurethane resin according to Supplementary Note 1, where the polylactone polyol is a compound represented by Formula (1) below. 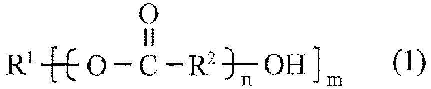 In Formula (1), R¹ represents an m-valent hydrocarbon group, R² represents a divalent hydrocarbon group, m represents an integer of 2 to 10, and n represents an integer of 1 to 35.
[Supplementary Note 3] The biodegradable polyurethane resin according to Supplementary Note 2, where the m is from 2 to 6 (preferably from 2 to 4).
[Supplementary Note 4] The biodegradable polyurethane resin according to Supplementary Note 2 or 3, where the R¹ is a hydrocarbon group having a structural formula formed by removing m groups of hydroxy groups from a structural formula of an m-valent polyhydric alcohol having from 2 to 20 carbons (preferably from 2 to 10 carbons, and more preferably from 2 to 5 carbons), and the m-valence is from divalence to hexavalence (preferably divalence to tetravalence, and more preferably divalence).
[Supplementary Note 5] The biodegradable polyurethane resin according to Supplementary Note 2 or 3, where the R¹ is a divalent hydrocarbon group having a structural formula formed by removing a hydroxy group from ethylene glycol.
[Supplementary Note 6] The biodegradable polyurethane resin according to any one of Supplementary Notes 2 to 5, where the n is from 1 to 20 (preferably from 3 to 10).
[Supplementary Note 7] The biodegradable polyurethane resin according to any one of Supplementary Notes 2 to 6, where the R² is a linear or branched (preferably linear) alkylene group having from 2 to 20 carbons (preferably from 3 to 15 carbons, and more preferably from 4 to 10 carbons).
[Supplementary Note 8] The biodegradable polyurethane resin according to any one of Supplementary Notes 2 to 6, where the R² is a pentamethylene group.
[Supplementary Note 9] The biodegradable polyurethane resin according to Supplementary Note 1, where the polylactone polyol is a reaction product of a polyhydric alcohol and lactone.
[Supplementary Note 10] The biodegradable polyurethane resin according to Supplementary Note 9, where the polyhydric alcohol is a divalent to hexavalent (preferably from divalent to tetravalent, more preferably divalent) alcohol.
[Supplementary Note 11] The biodegradable polyurethane resin according to Supplementary Note 9, where the polyhydric alcohol is ethylene glycol.
[Supplementary Note 12] The biodegradable polyurethane resin according to any one of Supplementary Notes 9 to 11, where the lactone is at least one type selected from α-acetolactone, β-propiolactone, γ-butyrolactone, γ-valerolactone, γ-nonalactone, δ-valerolactone, ε-caprolactone, cyclopentadecanolide, or cyclohexadecanolide.
[Supplementary Note 13] The biodegradable polyurethane resin according to any one of Supplementary Notes 9 to 11, where the lactone is ε-caprolactone.
[Supplementary Note 14] The biodegradable polyurethane resin according to any one of Supplementary Notes 9 to 13, where the number average molecular weight of the polylactone polyol is from 300 to 80000 (preferably from 500 to 4000, and more preferably from 1000 to 3000).
[Supplementary Note 15] The biodegradable polyurethane resin according to any one of Supplementary Notes 1 to 14, where the number of carbons of the aliphatic diisocyanate is 7 or greater (preferably from 7 to 22, and more preferably from 7 to 10).
[Supplementary Note 16] The biodegradable polyurethane resin according to any one of Supplementary Notes 1 to 15, where the aliphatic diisocyanate is a linear aliphatic diisocyanate, an alicyclic diisocyanate having no side chains, or a multimer of these.
[Supplementary Note 17] The biodegradable polyurethane resin according to any one of Supplementary Notes 1 to 15, where the aliphatic diisocyanate is pentamethylene diisocyanate.
[Supplementary Note 18] The biodegradable polyurethane resin according to any one of Supplementary Notes 1 to 17, where a content proportion of the structural unit derived from the aliphatic diisocyanate with respect to 1 part by mole of the structural unit derived from the polylactone polyol is from 1.00 to 7.00 parts by mole (preferably from 1.00 to 5.00 parts by mole, and more preferably from 1.00 to 3.00 parts by mole).
[Supplementary Note 19] The biodegradable polyurethane resin according to any one of Supplementary Notes 1 to 18, where a viscosity of a reaction product of the polylactone polyol and the diisocyanate at 75°C is 1500 mPa·s or less (preferably 1000 mPa·s or less, and more preferably 750 mPa·s or less).
[Supplementary Note 20] The biodegradable polyurethane resin according to any one of Supplementary Notes 1 to 19, further including a structural unit derived from an aliphatic diol.
[Supplementary Note 21] The biodegradable polyurethane resin according to Supplementary Note 20, where the aliphatic diol is a diol having a linear alkylene group having 2 or more carbons (preferably from 2 to 10 carbons, and more preferably from 3 to 6 carbons).
[Supplementary Note 22] The biodegradable polyurethane resin according to Supplementary Note 20, where the aliphatic diol is 1,4-butanediol.
[Supplementary Note 23] The biodegradable polyurethane resin according to any one of Supplementary Notes 20 to 22, where a molecular weight of the aliphatic diol is 350 or less (preferably 300 or less, and more preferably 200 or less).
[Supplementary Note 24] The biodegradable polyurethane resin according to any one of Supplementary Notes 20 to 23, including:
   a structural unit derived from a reaction product of the polylactone polyol and the aliphatic diisocyanate; and
   the structural unit derived from the aliphatic diol.
[Supplementary Note 25] The biodegradable polyurethane resin according to any one of Supplementary Notes 20 to 24, where a molar ratio (aliphatic diol/polylactone polyol) of the structural unit derived from the aliphatic diol to the structural unit derived from the polylactone polyol is from 0.10 to 5.00 (preferably from 0.50 to 4.00, and more preferably from 0.90 to 3.00).
[Supplementary Note 26] The biodegradable polyurethane resin according to any one of Supplementary Notes 1 to 25, further including a structural unit derived from an additional biodegradable polyol other than the polylactone polyol, where a content proportion of the structural unit derived from the additional biodegradable polyol in a total amount of the structural unit derived from the polylactone polyol and the structural unit derived from the additional biodegradable polyol is 3 mol% or less (preferably 1 mol% or less, and more preferably 0.5 mol% or less).
[Supplementary Note 27] The biodegradable polyurethane resin according to any one of Supplementary Notes 1 to 26, further including a structural unit derived from an additional polyisocyanate other than the aliphatic diisocyanate having 7 or more carbons and having no side chains, where a content proportion of the structural unit derived from the additional polyisocyanate in a total amount of the structural unit derived from the aliphatic diisocyanate having 7 or more carbons and having no side chains and the structural unit derived from the additional polyisocyanate is 3 mol% or less (preferably 1 mol% or less, and more preferably 0.5 mol% or less).
[Supplementary Note 28] The biodegradable polyurethane resin according to any one of Supplementary Notes 20 to 27, further including a structural unit derived from an additional chain extender other than the aliphatic diol, where a content proportion of the structural unit derived from the additional chain extender in a total amount of the structural unit derived from the aliphatic diol and the structural unit derived from the additional chain extender is 3 mol% or less (preferably 1 mol% or less, and more preferably 0.5 mol% or less).
[Supplementary Note 29] A method for producing a biodegradable polyurethane resin, the method including reacting components containing at least a polylactone polyol and an aliphatic diisocyanate having 7 or more carbons and having no side chains.
[Supplementary Note 30] The method for producing the biodegradable polyurethane resin according to Supplementary Note 29, the method including reacting a reaction product produced by reacting the polylactone polyol and the aliphatic diisocyanate in advance with an aliphatic diol.
[Supplementary Note 31] The method for producing the biodegradable polyurethane resin according to Supplementary Note 29 or 30, where an equivalent ratio (NCO/OH) of NCO groups contained in the diisocyanate to a total number of OH groups contained in the polylactone polyol and the aliphatic diol is from 0.90 to 1.10 (preferably from 0.95 to 1.05, and more preferably from 0.97 to 1.03).
[Supplementary Note 32] The method for producing the biodegradable polyurethane resin according to Supplementary Note 30 or 31, where a molar ratio (aliphatic diol/polylactone polyol) of the aliphatic diol to the polylactone polyol is 0.
[Supplementary Note 33] The method for producing the biodegradable polyurethane resin according to Supplementary Note 30 or 31, where a molar ratio (aliphatic diol/polylactone polyol) of the aliphatic diol to the polylactone polyol is from 0.10 to 5.00 (preferably from 0.50 to 4.00, and more preferably from 0.90 to 3.00).
[Supplementary Note 34] The method for producing the biodegradable polyurethane resin according to Supplementary Note 30, 31, or 33, where a viscosity at 75°C of a reaction product produced by reacting the polylactone polyol and the aliphatic diisocyanate in advance is 1500 mPa·s or less (preferably 1000 mPa·s or less, and more preferably 750 mPa·s or less).
[Supplementary Note 35] A molded article made of the biodegradable polyurethane resin described in any one of Supplementary Notes 1 to 28.

### Industrial Applicability

When the biodegradable polyurethane resin of the disclosure is used, a molded article that does not generate highly toxic aromatic amines at the time of decomposition and that has excellent mechanical properties that enable practical use can be produced. Furthermore, when the biodegradable polyurethane resin of the disclosure is used, a molded article that does not generate highly toxic aromatic amines at the time of decomposition and that has excellent mechanical properties that enable practical use can be produced with excellent productivity.

## Claims

1. A biodegradable polyurethane resin comprising:
a structural unit derived from a polylactone polyol; and
a structural unit derived from an aliphatic diisocyanate having 7 or more carbons and having no side chains.

2. The biodegradable polyurethane resin according to claim 1, wherein the polylactone polyol is a compound represented by Formula (1): 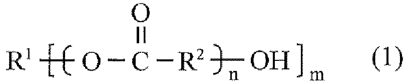 where R¹ represents an m-valent hydrocarbon group, R² represents a divalent hydrocarbon group, m represents an integer of 2 to 10, and n represents an integer of 1 to 35.

3. The biodegradable polyurethane resin according to claim 2, further comprising a structural unit derived from an aliphatic diol.

4. The biodegradable polyurethane resin according to claim 3, wherein the aliphatic diol is a diol having a linear alkylene group.

5. The biodegradable polyurethane resin according to claim 3, comprising:
a structural unit derived from a reaction product of the polylactone polyol and the aliphatic diisocyanate: and
the structural unit derived from the aliphatic diol.

6. The biodegradable polyurethane resin according to any one of claims 3 to 5, wherein a molar ratio (aliphatic diol/polylactone polyol) of the structural unit derived from the aliphatic diol to the structural unit derived from the polylactone polyol is from 0.10 to 3.00.

7. A method for producing a biodegradable polyurethane resin, the method comprising reacting components containing at least a polylactone polyol and an aliphatic diisocyanate having 7 or more carbons and having no side chains.

8. The method for producing the biodegradable polyurethane resin according to claim 7, the method comprising reacting a reaction product produced by reacting the polylactone polyol and the aliphatic diisocyanate in advance with an aliphatic diol.

9. The method for producing the biodegradable polyurethane resin according to claim 7 or 8, wherein an equivalent ratio (NCO/OH) of NCO groups contained in the aliphatic diisocyanate to a total number of OH groups contained in the polylactone polyol and the aliphatic diol is from 0.90 to 1.10.

10. A molded article made of the biodegradable polyurethane resin described in any one of claims 1 to 5.
